# EUROPÄISCHE PATENTANMELDUNG

(11) **EP 1 443 782 A1**
(43) Veröffentlichungstag der Anmeldung: **04.08.2004**
(21) Anmeldenummer: 03001963.2
(22) Anmeldetag: 30.01.2003
(51) Int. Cl.: H04Q 7/34, H04B 7/26, H04B 17/00

(54) **Verfahren zur Interferenzunterdrückung in einem Funkkommunikationssystem**

(71) Anmelder: SIEMENS AKTIENGESELLSCHAFT, 80333 München (DE)
(72) Erfinder: Färber, Michael, 82515 Wolfratshausen (DE); Hofmann, Jürgen, 86504 Merching (DE)

(57) **Zusammenfassung**

Die Erfindung betrifft ein Verfahren zur Interferenzunterdrückung bei einem Funkkommunikationssystem, bei dem festnetzseitig an einer ersten Basisstation einer ersten Funkzelle Synchronisationssignale von Basisstationen benachbarter Funkzellen überwacht werden. Für jede benachbarte Basisstation wird die zeitliche Abweichung des Synchronisationssignals der benachbarten Basisstation zum Synchronisationssignal der ersten Basisstation bestimmt und anhand der zeitlichen Abweichung jeder benachbarten Funkzelle ein Synchronisationsgrad als Maß für die zeitliche Synchronisation der benachbarten Basisstation zur ersten Basisstation zugeordnet. Mit Hilfe vorbekannter Ortskoordinaten der Basisstationen wird eine Interferenzsituation an einem Funkkommunikationsendgerät eines der ersten Funkzelle zugeordneten Teilnehmers bestimmt und für den Teilnehmer Maßnahmen zur Interferenzunterdrückung durchgeführt bzw. eingeleitet.

## Beschreibung

Die Erfindung betrifft ein Verfahren zur Interferenzunterdrückung bei einem Funkkommunikationssystem.

Es ist eine Vielzahl von Interferenzunterdrückungsverfahren bekannt, die entweder als stochastische oder als deterministische Interferenzunterdrückungsverfahren ausgeprägt sind.

Dabei werden Interferenzunterdrückungsverfahren sowohl teilnehmerseitig an einem Funkkommunikationsendgerät als auch festnetzseitig an einer Basisstation durchgeführt. Derartige Verfahren wurden beispielsweise auf der Tagung 3GPP TSG GERAN #12, 18.-22. November 2002, Sophia Antipolis, Frankreich, in den Dokumenten "Single Antenna Interference Cancellation (SAIC) - proposed scenarios for evaluation and requirement specification", Ericsson, Nokia, Tdoc GP-022962, Agenda item 7.1.5.9 oder in "SAIC: discussion on standardisation and signalling", Motorola Inc., Tdoc GP-023100, Agenda Item 7.1.5.9, oder in "Simulation Assumptions for GSM SAIC", Motorola, GP-023101, Agenda Item 7.1.5.9, oder in "Single Antenna Interference Cancellation (SAIC): Whitening Process for adjacent interferers", Nortel Networks, GP-023102, Agenda Item 7.1.5.9, oder in "On the Potential Performance Gains of Single-Antenna Interference Cancellation and Ways to Assess it", Intel Corp., TSGG#12(02)3207, Agenda Item 7.1.5.9 oder in "Draft Feasibility Study on Single Antenna Interference Cancellation (SAIC) for GSM Networks", Cingular Wireless, GP-022892, Agenda Items 6.3, 7159, vorgestellt.

Bei den festnetzseitig angewendeten Interferenzunterdrückungsverfahren wird beispielsweise ein sogenannter signifikanter "Interferer" ermittelt und durch geeignete Maßnahmen unterdrückt. Derartige Verfahren sind beispielsweise der Veröffentlichung "Technique for Co-channel Interference Suppression in TDMA Mobile Radio Systems", S.W. Wales, IEE Proceedings - Communications, Vol.142, No.2, April 1995, Page 106-114, entnehmbar.

Diese Interferenzunterdrückungsverfahren sowie weitere, hier nicht näher beschriebene, Verfahren zur Interferenzunterdrückung sind abhängig vom Funkkommunikationsstandard bzw. abhängig von einer dortigen zeitlichen Synchronisation von Basisstationen untereinander anzuwenden.

Die vorliegende Erfindung hat zur Aufgabe, ein verbessertes Verfahren zur Interferenzunterdrückung für ein Funkkommunikationssystem anzugeben.

Die Aufgabe der Erfindung wird durch die Merkmale des Patentanspruchs 1 gelöst. Vorteilhafte Weiterbildungen der Erfindung sind in den Unteransprüchen angegeben.

Der Erfindung liegt die Erkenntnis zugrunde, dass auch bei zeitlich als synchronisiert betrachteten Basisstationen in der Realität Unterschiede bezüglich der Synchronisation auftreten. Der Grund hierfür ist einerseits, dass bei den einzelnen Funkkommunikationsstandards für die Basisstationen lediglich einzuhaltende lokale Synchronisierungsgenauigkeiten vorgegeben werden und dass andererseits bauartbedingte Schwankungen bei lokalen Oszillatoren an einer Basisstation zu Unterschieden in der Synchronisation mehrerer Basisstationen führen. So ergeben sich in der Realität oft sogenannte "Synchronisationsinseln" innerhalb eines Funkkommunikationsnetzes, deren zeitliche Synchronisation von der vorgegebenen und als ideal angenommenen Synchronisation mehr oder weniger stark abweichen.

Eine Langzeitstabilität der Synchronisation wird von Netzelementen zugeordneten Taktsignalen bzw. vom zu deren Übertragung verwendeten Übertragungssystem abgeleitet (z.B. Richtfunk, ATM, PDH- und SDH-Übertragung).

Basisstationen, die ihre Langzeitstabilität von einem gemeinsamen Netzknoten, von einem Base Station Controller BSC oder von einem Mobile Switching Center MSC, ableiten, haben eine gemeinsame Basis für die Langzeitstabilität. Jedoch können in einer geographischen Region benachbarte Basisstationen unterschiedliche Netzknoten als Referenz verwenden. Beispielsweise verwendet eine erste Basisstation einer geographischen Region einen ihr zugeordneten ersten Base Station Controler BSC als Referenz zur Synchronisation, während eine zur ersten Basisstation benachbarte zweite Basisstation einen ihr zugeordneten zweiten Base Station Controler BSC als Referenz verwendet. Gleiches gilt für Basisstationen einer geographischen Region, bei der ein Übergang von Zuständigkeiten zwischen zugeordneten Mobile Switching Centern MSC erfolgt. In derartigen Bereichen wird eine größere Abweichung bei der Langzeitstabilität der Synchronisation erfolgen, als bei einer grundsätzlich vorliegenden Abweichung einer Kurzzeitstabilität der Synchronisation, die durch einen Drift von Lokaloszillatoren bedingt wird.

Bei einem Funkkommunikationsnetz, das per Definition als zeitlich synchronisiert betrachtet wird, und bei dem aufgrund der zeitlichen Synchronisation geeignete Interferenzunterdrückungsverfahren angewendet werden sollen, ist jedoch von entscheidender Bedeutung, eine reale zeitliche Synchronisation von Basisstationen des Funkkommunikationsnetzes zu bestimmen.

Mit Hilfe des erfindungsgemäßen Verfahrens wird an einer betrachteten Basisstation eine reale zeitliche Synchronisierung zu benachbarten Basisstationen von benachbarten Funkzellen bestimmt. Basierend auf der realen Synchronisation wird jeder einzelnen Funkzelle bzw. jeder Basisstation ein sogenannter lokaler Synchronisationsgrad als Maß für die zeitliche Synchronisation der betrachteten Basisstation zur jeweils benachbarten Basisstation zugeordnet. An der betrachteten Basisstation ist eine sogenannte "Measurement Unit" MU als Referenz angeordnet.

Die reale Synchronisation wird mit Hilfe der "Measurement U-nit" MU bestimmt, die sowohl zur Durchführung des erfindungsgemäßen Verfahrens als auch zur Durchführung herkömmlicher Aufgaben einer "Local Measurement Unit" LMU ausgebildet ist. Zu den herkömmlichen Aufgaben einer LMU zählen beispielsweise, wie in der Spezifikation 3GPP 43.059 beschrieben, Messungen, insbesondere Zeitmessungen, an Funksignalen und Weiterleitung der Messergebnisse oder eine Bestimmung von Funkfeldänderungen.

Die "Measurement Unit" MU zur Durchführung des erfindungsgemäßen Verfahrens kann sowohl in existierende Basisstationen eingebracht als auch im sogenannten "Stand-Alone" Betrieb verwendet werden. Besonders vorteilhaft ermittelt die "Measurement Unit" MU für das Funkkommunikationsnetz Messinformationen und lokale Synchronisationsgrade, ohne dazu Funkübertragungsressourcen verwenden zu müssen.

Mit Hilfe der "Mersurement Unit" MU werden entsprechende Informationen einem sogenannten "Operation and Maintenance Center" bzw. einem "Radio Ressource Management" zur Verfügung gestellt.

Mit Hilfe der vom LMU-Anteil der Measurement Unit MU bestimmten Parameter und unter Berücksichtigung von an der betrachteten Basisstation vorbekannten geographischen Koordinaten der benachbarten Basisstationen, sowie der den benachbarten Basisstationen zugeordneten lokalen Synchronisationsgraden ist für jeden Teilnehmer eine Interferenzsituation am Funkkommunikationsendgerät des Teilnehmers bestimmbar.

Unter Berücksichtigung des Synchronisationsgrades ist für jede Teilnehmerverbindung festnetzseitig ein Algorithmus zu ermitteln, mit dessen Hilfe eine Interferenzunterdrückung am Funkkommunikationsendgerät des Teilnehmers optimierbar ist.

Ist das Funkkommunikationsendgerät zur Anwendung unterschiedlicher Interferenzunterdrückungsverfahren ausgeführt, so werden beispielsweise dem Funkkommunikationsendgerät Informationen über eine festnetzseitig ermittelte Synchronisationsqualität und über eine dem Teilnehmer zuordenbare Interferenzlast mitgeteilt, die es dem Funkkommunikationsendgerät erlaubt, einen entsprechend optimalen Algorithmus zur Interferenzunterdrückung aus den im Funkkommunikationsendgerät implementierten Interferenzunterdrückungsverfahren auszuwählen.

Oder aber dem Funkkommunikationsendgerät wird ein festnetzseitig ermittelter Algorithmus zur Interferenzunterdrückung übertragen oder es wird eine ein Interferenzunterdrückungsverfahren kennzeichnende Information an das Funkkommunikationsendgerät übertragen, die es dem Funkkommunikationsendgerät erlaubt, das entsprechende Interferenzunterdrückungsverfahren aus den im Funkkommunikationsendgerät implementierten Interferenzunterdrückungsverfahren auszuwählen.

Verfügt das Funkkommunikationsendgerät nicht über Verfahren zur Interferenzunterdrückung, so werden dem entsprechenden Teilnehmer zur Datenübertragung festnetzseitig Funkübertragungsressourcen derart zugeteilt, dass die festnetzseitig bestimmte Interferenzsituation am Funkkommunikationsendgerät verbessert wird.

Funkkommunikationsendgeräte, die zur Anwendung von Interferenzunterdrückungsverfahren ausgestaltet sind, werden mit Hilfe des LMU-Anteils der "Measurement Unit" MU positionsgenau bestimmt und bei der Zuordnung von Funkübertragungsressourcen entsprechend berücksichtigt.

Erfolgt eine Zuordnung von Funkübertragungsressourcen unter Berücksichtigung der teilnehmerspezifischen Interferenzsituation, so wird eine Erhöhung einer Teilnehmerdichte im Funkkommunikationssystem erreicht. Beispielsweise wird bei einer entsprechend durchgeführten Optimierung des sogenannten "Frequency Reuse"-Faktors ermöglicht, die Teilnehmerdichte zu erhöhen. Festnetzseitig werden geeignete Schwellwerte für die Teilnehmerdichte ("Traffic-Load") eingeführt, um einen Kanalbelegungsgrad dem Frequency-Reuse-Faktor anzupassen.

Eine entsprechend optimierte Interferenzunterdrückung erlaubt im Extremfall einen Frequency-Reuse-Faktor von "1", d.h. ein gesamter spektraler Vorrat wird in jeder Funkzelle wiederholt. Hierbei ist jedoch zu beachten, dass dann Funkübertragungskanäle von benachbarten Funkzellen nicht zu 100% der Zeit belegt sein dürfen, da alleine durch Blockierwahrscheinlichkeiten gemäß einer Erlangtheorie eine Belegung von Funkübertragungsressourcen einzuschränken ist, um eine gewünschte Blockierwahrscheinlichkeit zu erreichen.

Ein zweites bestimmendes Element ist eine mittlere Belegung von Interferenzzellen, die noch eine Nutzsignal-Dekodierung zulassen.

Das erfindungsgemäße Verfahren kommt somit bevorzugt bei FDD-TDMA-Funkkommunikationssystemen zur Anwendung, bei denen ein enger Frequency-Reuse, im Optimalfall ein Frequency-Reuse-Faktor von "1", angestrebt wird.

Bei einem Frequency-Reuse von eins können bei benachbarten Funkzellen entsprechende Funkübertragungsressourcen gleicher Trägerfrequenz denjenigen mobilen Teilnehmern zugeordnet werden, deren Funkkommunikationsendgeräte zur Anwendung von Interferenzunterdrückungsverfahren vorgesehen sind und die damit entsprechend unempfindlich gegenüber Interzell-Interferenzen sind. Im Gegenzug werden Mobilteilnehmer, die diese Verfahren nicht verwenden können, Funkübertragungsressourcen zugeordnet, deren Trägerfrequenz innerhalb benachbarter Basisstationen einen entsprechend höheren Frequency-Reuse aufweist.

Interferenzunterdrückungsverfahren, die einen besonders hohen Gewinn erzielen, setzen sowohl eine gewisse Synchronitätsqualität als auch einen sogenannten "signifikanten Interferer" voraus. Mit Hilfe der "Measurement Unit" MU werden diese Parameter am Ort der "Measurement Unit" MU bestimmt und sowohl an ein "Operation and Maintenance System" als auch an eine Einrichtung zur "Radio Resource Management" RRM signalisiert. Abhängig von erfüllten Kriterien, wird netzseitig entschieden, ob höhere oder niedrigere Gewinne bei der Interferenzunterdrückung erzielbar sind.

Ist die ermittelte Synchronisierung der Basisstationen von niedriger Qualität und erbringen Interferenzunterdrückungsverfahren nur einen niedrigen Gewinn bei der Interferenzunterdrückung, wird der Schwellwert für die Teilnehmerdichte auf den Funkübertragungskanälen neu angepasst. Ist hingegen die Synchronisierung der Basisstationen von hoher Qualität und wird kein unzulässig starker Interferer von der "Measurement Unit" MU detektiert, so wird mit Hilfe des "Radio Ressource Management" RRM eine Belegung im Gleichkanal einer benachbarten Funkzelle für diejenigen Funkkommunikationsendgeräte durchgeführt, die über Einrichtungen zur Interferenzunterdrückung verfügen. Dies erfolgt wiederum unter Berücksichtigung eines optimalen Gewinns.

Mit Hilfe des erfindungsgemäßen Verfahrens, bzw. durch die festnetzseitig durchgeführte und aufgrund der bekannten Ortskoordinaten hochgenaue Bestimmung der Synchronisationsgrade, wird seitens eines Netzbetreibers eine vorteilhafte Planung des Funkkommunikationssystems realisiert - ohne zur Bestimmung der Synchronisationsgrade wertvolle Funkübertragungsressourcen verwenden zu müssen. Eine festnetzseitige Anbindung der "Measurement Unit" MU erfolgt mit Hilfe eines anderen Transportmediums als der zur Teilnehmerdatenübertragung verwendeten Funkübertragung.

Ein Netzbetreiber erhält dadurch einen wirtschaftlichen Vorteil, da eine derart eingesparte Funkübertragungskapazität für andere Signalisierungen auf dem Radio Interface zur Verfügung steht. Weiterhin bietet ein unabhängiges Transportmedium eine höhere Übertragungsbandbreite, wodurch erweiterte bzw. häufigere Messungen mit hoher Genauigkeit realisierbar sind.

Mit Hilfe der erfindungsgemäß bestimmten Synchronisationsgrade wird beispielsweise eine Verbesserung der Synchronisation innerhalb des Funkkommunikationssystems durch eine Nachjustierung der zeitlichen Synchronisation einzelner Basisstationen ermöglicht. Basisstationen mit einer Fehlfunktion der Synchronisation werden erkannt und entsprechend nachjustiert. Durch die Nachjustierung wird innerhalb des Funkkommunikationsnetzes eine gleichmäßige Synchronisationsgüte eingestellt. Die oben beschriebenen "Synchronisationsinseln" werden in ihrem Auftreten bzw. in ihrer Abweichung von einer vorgebbaren Soll-Synchronisation minimiert.

Die erfindungsgemäße festnetzseitige Bestimmung der Synchronisationsgrade ist unabhängig vom Umfang der Marktdurchdringung mit Funkkommunikationsendgeräten, die zur Durchführung von Interferenzunterdrückungsverfahren ausgestaltet sind, durchführbar. Das erfindungsgemäße Verfahren zur Interferenzunterdrückung ist aufgrund der oben beschriebenen festnetzseitigen Zuteilung von geeigneten Funkübertragungsressourcen ebenfalls unabhängig von dieser Marktdurchdringung einsetzbar.

Sind jedoch Funkkommunikationsendgeräte in einer Funkzelle aktiv, mit deren Hilfe am Standort eines Teilnehmers Synchronisationsgrade von benachbarten Basisstationen ermittelt werden können, so können diese am Funkkommunikationsendgerät gewonnene Synchronisationsgrade an das Festnetz übertragen und dort zur Genauigkeitssteigerung beim erfindungsgemäßen Verfahren verwendet werden.

Werden basisstationsseitig adaptive Antennensysteme verwendet, so wird eine optimierte Funkzellengrößen-Steuerung bei einer optimierten Übertragungsqualität ermöglicht.

Im folgenden wird ein Ausführungsbeispiel der vorliegenden Erfindung anhand einer Zeichnung näher erläutert. Dabei zeigen:
- FIG 1: benachbarte Basisstationen benachbarter Funkzellen eines Funkkommunikationssystems, bei dem das erfindungsgemäße Verfahren zur Anwendung kommt, und
- FIG 2: eine Ermittlung von Synchronisationsgraden der in FIG 1 dargestellten Basisstationen.

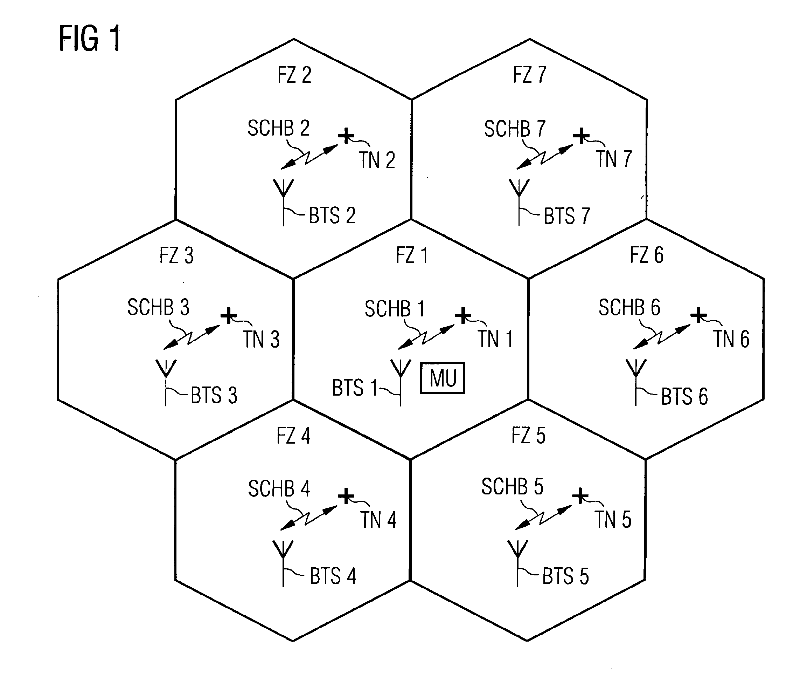

FIG 1 zeigt benachbarte Funkzellen FZ1 bis FZ7 mit Basisstationen BTS1 bis BTS7 eines Funkkommunikationssystems zur Anwendung des erfindungsgemäßen Verfahrens. Dabei wird im Folgenden stellvertretend für andere Standards ein als GSM/GERAN-Mobilfunknetz ausgebildetes Funkkommunikationssystem betrachtet.

Ein erster Teilnehmer TN1 einer ersten Funkzelle FZ1 ist einer ersten Basisstation BTS1 zugeordnet. Die erste Basisstation BTS1 sendet zur zeitlichen Synchronisation von der ersten Funkzelle FZ1 zugeordneten Teilnehmern, hier nicht dargestellt, über einen SCH-Übertragungskanal einen SCH-Burst SCHB1 als Synchronisationssignal aus.

Entsprechendes gilt für die der ersten Funkzelle FZ1 benachbarten Basisstationen BTS2 bis BTS7 der Funkzellen FZ2 bis FZ7, die zur Synchronisierung der Funkkommunikationsendgeräte von Teilnehmern TN2 bis TN7 analog Synchronisationssignale in Form von SCH-Bursts SCHB2 bis SCHB7 aussenden.

An der ersten Basisstation BTS1 werden mit Hilfe einer mit dem Festnetz via Übertragungsleitungen verbundenen "Measurement-Unit" MU die SCH-Bursts SCHB2 bis SCHB7 der benachbarten Basisstationen BTS2 bis BTS7 empfangen und zur Gewinnung von Synchronisationsgraden ausgewertet. Der SCH-Burst des SCH-Übertragungskanals eignet sich dafür besonders, da er eine sogenannte "Extended Training Sequence" mit 64 Bits aufweist.

Die Ermittlung der Synchronisationsgrade der zur ersten Basisstation BTS1 benachbarten Basisstationen BTS2 bis BTS7 erfolgt durch Kreuzkorrelation eines empfangenen SCH-Bursts einer benachbarten Basisstation mit einer vorbekannten Trainingssequenz des SCH-Bursts der benachbarten Basisstation. Bei der Korrelationsschätzung im Empfänger wird im Zeitbereich ein "Peak" mit einer entsprechenden, die benachbarte Basisstation repräsentierenden Zeitlage deutlich sichtbar erzeugt.

Diese repräsentierende Zeitlage wird mit einer Zeitlage eines "Peaks" verglichen, der mit Hilfe der Trainingssequenz des SCH-Bursts SCHB1 der ersten Basisstation BTS1 erzeugt wurde. Aus der Differenz der Zeitlagen dieser "Peaks" wird nun auf den Synchronisationsgrad der benachbarten Basisstation zurückgeschlossen bzw. wird der jeweiligen benachbarten Basisstation ein entsprechender lokaler Synchronisationsgrad zugeordnet.

Mit Hilfe der "Measurement-Unit" wird die Synchronisationsqualität zwischen den Basisstationen BTS2 bis BTS7, bezogen auf die betrachtete erste Basisstation BTS1, bestimmt.

Mit Hilfe sogenannter "Encrypted Bits", die ebenfalls im SCH-Burst übertragen werden und die die Kennung der jeweiligen Basisstation repräsentieren, ist eine entsprechende Zuordnung der Zeitlage bzw. des lokalen Synchronisationsgrades zur jeweiligen Basisstation innerhalb einer an der ersten Basisstation hinterlegten Tabelle möglich.

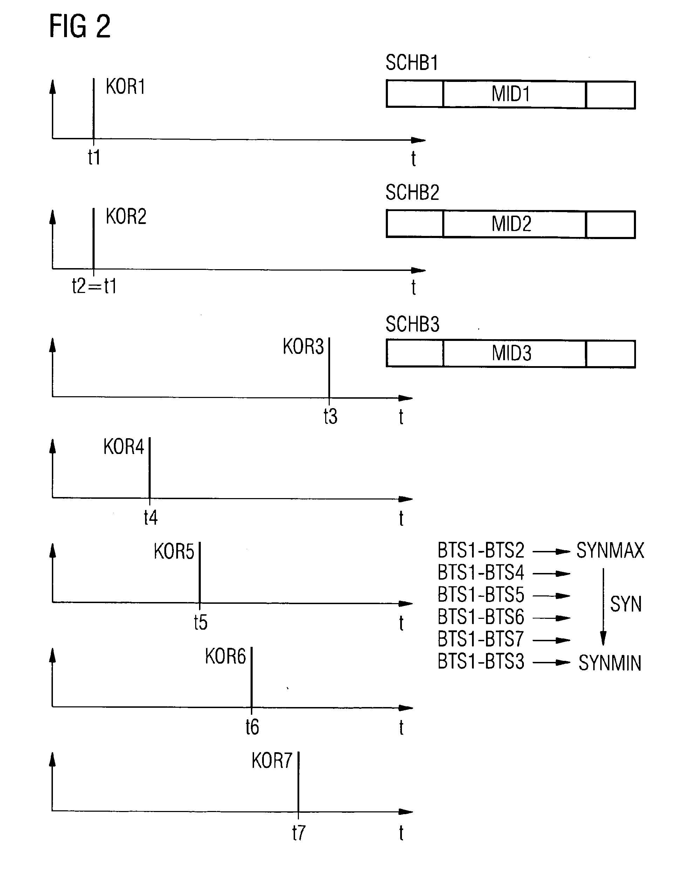

FIG 2 zeigt eine Ermittlung von Synchronisationsgraden der in FIG 1 dargestellten Basisstationen BTS1 bis BTS7.

Mit Hilfe eines Kreuz-Korrelationsverfahrens wird aus einer als Trainingssequenz verwendeten erweiterten Midamble MID1 bis MID7 jedes SCH-Bursts SCHB1 bis SCHB7 jeweils ein der entsprechenden Basisstation zuordenbarer Korrelationspeak KOR1 bis KOR7 gewonnen, der eine zeitliche Differenz zum Korrelationspeak KOR1 des ersten SCH-Bursts SCHB1 aufweist.

Die Differenz zwischen einem betrachteten Korrelationspeak KOR2 bis KOR7 zum Korrelationspeak KOR1 ist ein Maß für den Synchronisationsgrad der Basisstationen BTS2 bis BTS7 zur ersten Basisstation BTS1 am Ort der "Measurement Unit" MU.

Hier ist beispielsweise die erste Basisstation BTS1 zu einer zweiten Basisstation BTS2 ideal zeitlich synchronisiert, da die Differenz gegen Null geht. Den beiden Basisstationen BTS1 und BTS2 wird somit ein maximaler lokaler Synchronisationsgrad SYNMAX zugeordnet.

Im Gegensatz dazu ist eine dritte Basisstation BTS3 zur ersten Basisstation BTS1 als zeitlich nicht synchronisiert zu betrachten, weshalb diesen beiden Basisstationen BTS1 und BTS3 ein minimaler lokaler Synchronisationsgrad SYNMIN zugeordnet wird.

Die Basisstationen BTS4 bis BTS7 weisen einen Verlauf in der zeitlichen Synchronisation zur ersten Basisstation BTS1 auf, weshalb entsprechenden Basisstationspärchen entsprechend verlaufende, d.h. entsprechend abgestufte lokale Synchronisationsgrade SYN zugeordnet werden. Die Abstufung bzw. die Auflösung zwischen SYNMIN und SYNMAX ist systembedingt festlegbar.

Die Abstufungen der zeitlichen Synchronisation werden bei der erfindungsgemäß festnetzseitig erfolgenden Auswahl des Interferenzunterdrückungsverfahrens und bei der Bestimmung der teilnehmerspezifischen Interferenzsituation am Funkkommunikationsendgerät des Teilnehmers TN1 entsprechend berücksichtigt. Eine Auswahl geeigneter Interferenzunterdrückungsverfahren ist den in der Beschreibungseinleitung zitierten Dokumenten zu entnehmen.

Dabei kommen auch sogenannte "adaptive" Interferenzunterdrückungsverfahren zum Einsatz, die entsprechend der bestimmten lokalen Synchronisationsgrade der benachbarten Basisstationen optimiert sind, wobei verschiedene Interferenzunterdrückungsverfahren kombiniert und abhängig vom lokalen Synchronisationsgrad der benachbarten Basisstationen angewendet werden.

Am Funkkommunikationsendgerät des Teilnehmers TN1 der ersten Funkzelle FZ1 wird für störende Teilnehmersignale anhand des lokalen Synchronisationsgrades SYNMAX des Basisstationspärchens BTS1-BTS2 ein Interzell-Interferenzunterdrückungsverfahren ausgewählt, das für zeitlich zueinander synchrone und einander störende Teilnehmersignale optimal geeignet ist - hier beispielsweise für das den Teilnehmer TN1 störende Signal des Teilnehmers TN2.

Anhand des Synchronisationsgrades des Basisstationspärchens BTS1-BTS3 wird hingegen ein Interzell-Interferenzunterdrückungsverfahren ausgewählt, das für zeitlich nichtsynchrone und einander störende Teilnehmersignale optimal geeignet ist - hier beispielsweise für das den Teilnehmer TN1 störende Signal des Teilnehmers TN3.

Anhand der ermittelten Synchronisationsgrade der Funkzellen FZ2 bis FZ7 zur Funkzelle FZ1 ist auch ein mehrere einzelne Interferenzunterdrückungsverfahren beinhaltendes gemeinsames Interferenzunterdrückungsverfahren anwendbar, mit dessen Hilfe störende Signale der Teilnehmer TN2 bis TN7 gemeinsam beim Funkkommunikationsendgerät des Teilnehmers TN1 eliminiert werden.

Bedarfsweise werden die ermittelten Synchronisationsgrade gemittelt.

Mit Hilfe einer Liste von Trainingssequenzen der benachbarten Basisstationen ist sowohl im Funkkommunikationsendgerät als auch in der "Measurement Unit" MU eine Leistungsbeziehung zwischen den Synchronisationssignalen der Basisstationen bestimmbar. Dadurch ist ein einzelner Interferer bestimmbar, dessen Leistung signifikant größer ist als die Leistungssumme von weiteren Interferern.

Dies ist dann gegeben, wenn das Signal des signifikanten Interferers einen relativen Abstand zum Summensignal aller weiteren Interferer aufweist und auch zum Nutzsignal ein vorgegebenes relatives Verhältnis nicht überstiegen wird. Außerdem darf die Summenleistung der weiteren Interferer einen relativen Schwellwert zum Nutzsignal nicht überschreiten.

Ist dies beim signifikanten Interferer der Fall, kann von einer Unterdrückung des Interferers ausgegangen werden, sofern ein am Ort des Funkkommunikationsendgerätes vorliegender Synchronisationsgrad der betreffenden Basisstation gegenüber der dem Nutzsignal zugeordneten Basisstation hinreichend hoch im Sinne von SYNMAX ist.

## Patentansprüche

1. Verfahren zur Interferenzunterdrückung bei einem Funkkommunikationssystem,
- bei dem festnetzseitig an einer ersten Basisstation einer ersten Funkzelle Synchronisationssignale von Basisstationen benachbarter Funkzellen überwacht werden,
- bei dem für jede benachbarte Basisstation eine zeitliche Abweichung des Synchronisationssignals der benachbarten Basisstation zum Synchronisationssignal der ersten Basisstation bestimmt und anhand der zeitlichen Abweichung jeder benachbarten Funkzelle ein Synchronisationsgrad als Maß für die zeitliche Synchronisation der benachbarten Basisstation zur ersten Basisstation zugeordnet wird,
- bei dem festnetzseitig mit Hilfe vorbekannter Ortskoordinaten der Basisstationen eine Interferenzsituation an einem Funkkommunikationsendgerät eines der ersten Funkzelle zugeordneten Teilnehmers bestimmt wird, und
- bei dem abhängig von der teilnehmerspezifischen Interferenzsituation für den zugeordneten Teilnehmer Maßnahmen zur Interferenzunterdrückung durchgeführt werden.

2. Verfahren nach Anspruch 1, bei dem basierend auf der Interferenzsituation und auf dem Synchronisationsgrad festnetzseitig ein teilnehmerspezifischer Algorithmus zur Interferenzunterdrückung bestimmt und dem Teilnehmer, dessen Funkkommunikationsendgerät zur Anwendung von Interferenzunterdrückungsverfahren ausgestaltet ist, mitgeteilt wird.

3. Verfahren nach Anspruch 1, bei dem basierend auf der Interferenzsituation und auf dem Synchronisationsgrad festnetzseitig teilnehmerspezifische Parameter zur Interferenzunterdrückung bestimmt und zum Teilnehmer, dessen Funkkommunikationsendgerät zur Anwendung von Interferenzunterdrückungsverfahren ausgestaltet ist, übertragen werden, und bei dem teilnehmerseitig basierend auf den Parametern ein Algorithmus zur Interferenzunterdrückung ausgewählt und/oder adaptiv angepasst wird.

4. Verfahren nach einem der Ansprüche 1 bis 3, bei dem festnetzseitig unter Berücksichtigung der Interferenzsituation eine Zuteilung von Funkübertragungsressourcen an das Funkkommunikationsendgerät des Teilnehmers derart erfolgt, dass beim Teilnehmer auftretende Interferenzen minimiert werden oder dass mit Hilfe des dem Teilnehmer mitgeteilten Algorithmus minimierbar sind.

5. Verfahren nach einem der vorhergehenden Ansprüche, bei dem als Funkkommunikationssystem ein GSM/GERAN-Mobilfunksystem oder ein FDD-TDMA-Mobilfunksystem verwendet wird.

6. Verfahren nach Anspruch 5, bei dem als Synchronisationssignal ein SCH-Burst mit erweiterter Midamble-Bitfolge verwendet und ausgewertet wird.

7. Verfahren nach einem der vorhergehenden Ansprüche, bei dem festnetzseitig anhand des Synchronisationsgrades Basisstationen mit mangelhafter Synchronisation ermittelt und in der zeitlichen Synchronisation nachjustiert werden.

8. Verfahren nach einem der vorhergehenden Ansprüche, bei dem der Synchronisationsgrad als zusätzlicher Wert bei einer Positionsbestimmung des Funkkommunikationsendgeräts verwendet wird.

9. Verfahren nach einem der vorhergehenden Ansprüche, bei dem basisstationsseitig die ermittelten Synchronisationsgrade für eine Auswahl eines Algorithmus zur Interferenzunterdrückung beim Empfang eines Teilnehmersignals verwendet werden.
